# EUROPÄISCHE PATENTANMELDUNG

(11) **EP 2 522 834 A1**
(43) Veröffentlichungstag der Anmeldung: **14.11.2012**
(21) Anmeldenummer: 12178771.7
(22) Anmeldetag: 18.09.2007
(51) Int. Cl.: F02D 11/04, F02D 9/04

(54) **Vorrichtung zur Betätigung eines Klappenventils in einer Abgasanlage**

(30) Priorität: 22.09.2006 DE 102006044897
(62) Teilanmeldung aus: 07018278.7
(71) Anmelder: Friedrich Boysen GmbH & Co. KG, 72213 Altensteig (DE); AL-KO KOBER GmbH, 6280 Zell am Ziller (AT)
(72) Erfinder: Wellner, Friedrich, 86684 Holzheim (DE); Sailer, Wolfgang, 6290 Mayrhofen (AT); Stockinger, Karl, 72224 Ebhausen-Rotfelden (DE); Kainzner, Christoph, 6283 Hippach (AT)
(74) Vertreter: Manitz, Finsterwald & Partner GbR

(57) **Zusammenfassung**

Vorrichtung zur Betätigung eines Klappenventils (4), insbesondere eines Bypassventils, in einer Abgasanlage eines Kraftfahrzeugs, mit einem Antriebsmittel (1), einem Kraftübertragungsmittel (2) und einem Anschlussmittel (3) zum Herstellen einer Wirkverbindung zwischen dem Antriebsmittel (1) und dem Klappenventil (4), wobei zur Bereitstellung einer Betätigungsvorrichtung ohne Unterdruckbedarf als Kraftübertragungsmittel zwei Seilzüge (2) vorgesehen sind, von denen der eine in Öffnungsrichtung und der andere in Schließrichtung am Klappenventil (4) angreift.

## Beschreibung

Die vorliegende Erfindung betrifft eine Vorrichtung zur Betätigung eines Klappenventils, insbesondere eines Bypassventils, in einer Abgasanlage eines Kraftfahrzeugs, mit einem Antriebsmittel, einem Kraftübertragungsmittel und einem Anschlussmittel zum Herstellen einer Wirkverbindung zwischen dem Antriebsmittel und dem Klappenventil.

Herkömmliche Abgasklappen in Kraftfahrzeugen werden durch Unterdruck betätigt, wobei der Unterdruck über eine Unterdruckdose vom Motor zur Verfügung gestellt wird. Da jedoch weitere Verbraucher hinzugekommen sind, wird die Unterdruckversorgung immer schwieriger.

Der Erfindung liegt die Aufgabe zugrunde, eine alternative Betätigung für Klappenventile in Abgasanlagen zu schaffen.

Diese Aufgabe wird dadurch gelöst, dass als Kraftübertragungsmittel zwei Seilzüge vorgesehen sind, von denen der eine in Öffnungsrichtung und der andere in Schließrichtung am Klappenventil angreift.

Die Verwendung eines Doppelseilzugs zur Betätigung von Klappenventilen in Abgasanlagen von Kraftfahrzeugen hat den Vorteil, dass keine Abhängigkeit mehr von der zur Verfügungstellung von Unterdruck durch den Motor besteht. Zudem kann die Betätigungsvorrichtung mehr oder weniger in jeder Einbauposition verbaut werden. Des Weiteren kann das verwendete Antriebsmittel in entfernter Position, insbesondere an temperaturgeschützter Stelle, angeordnet werden. Im Heißbereich wird dadurch auch deutlich weniger Platz benötigt, und die an der Abgasanlage verbauten schwingfähigen Massen sind reduziert. Durch Verwendung von zwei Seilzügen ist außerdem eine Rückstelleinrichtung am Klappenventil entbehrlich.

Bevorzugt sind die Seilzüge als Bowdenzüge ausgebildet. Neben dem Schutz gegen Verschmutzung durch die Bowdenzughülle ermöglicht diese durch die Abstützung eine sichere Betätigung des Klappenventils.

Nach einer besonders bevorzugten Ausgestaltung sind die Seilzüge an beiden Enden jeweils mit dem anderen Seilzug verbunden, insbesondere als Endlosseilzug ausgebildet. Dadurch ergibt sich eine vereinfachte Montage und erleichterte Einstellung der Betätigungsvorrichtung. Außerdem können die Seilzüge nicht nur als Zug-Druck-Bowdenzüge, sondern auch als Seilzüge mit reiner Zugbetätigung ausgebildet sein.

Die beiden Seilzüge können durch eine gemeinsame Hülle umgeben sein. Dadurch ist die Positionierung der Seilzüge zwischen Klappenventil und Antriebsmittel vereinfacht und der Platzbedarf verringert.

In der Hülle kann auch eine elektrische Steuer-, Überwachungs- oder Regelungsleitung mitgeführt werden. Die Leitung ist dadurch geschützt, ohne dass hierfür separate Mittel erforderlich sind.

Als Antriebsmittel kommt bevorzugt ein Elektromotor, insbesondere Gleichstrommotor in Frage. Ein solcher zeichnet sich durch hohe Funktionssicherheit und einfache Betätigung sowie einen günstigen Preis aus.

Bevorzugt ist es auch, wenn der Motor bei Erreichen der Endstellungen des Klappenventils automatisch abschaltbar und/oder in seiner Drehrichtung umschaltbar ist. Dies kann insbesondere über eine Messung der Leistungsaufnahme des Motors erfolgen. Der Betrieb der Betätigungsvorrichtung ist dadurch vereinfacht.

Für besondere Anwendungen können nach einer Ausgestaltung der Erfindung Zwischenstellungen des Klappenventils einstellbar sein, insbesondere durch Verwendung eines Schrittmotors. Damit kann vorteilhaft eine Teilöffnung eingestellt werden.

Eine einfache Montage kann dadurch erreicht werden, dass die Seilzüge auf Seiten des Antriebs und/oder auf Seiten des Klappenventils über eine Mitnehmerscheibe geführt sind. Die Betätigungsvorrichtung kann so vorgefertigt werden und muss im Fahrzeug über die Mitnehmerscheibe lediglich mit dem Antrieb und/oder dem Klappenventil durch Aufstecken verbunden werden.

Besonders bevorzugt sind beide Mitnehmerscheiben untereinander gleich ausgebildet. Dadurch können einerseits die Kosten reduziert und andererseits der Einbau erleichtert werden, da die Einbaurichtung beliebig ist.

Bei Ausführung der Mitnehmerscheiben als Blechformteil ergibt sich eine kostengünstige Herstellung und ein geringes Gewicht.

Für bestimmte Anwendungen sind Mittel zum getakteten Betätigen des Klappenventils vorgesehen. Für weitere Anwendungen können Mittel zum Betätigen mit unterschiedlicher Geschwindigkeit vorgesehen sein. Damit kann verschiedenen Anforderungen an Klappenventile Rechnung getragen werden.

Nach einer weiteren Ausgestaltung der Erfindung ist eine Einrichtung zum Einstellen einer Vorspannung der beiden Seilzüge, insbesondere eine sich am Mantel abstützende Feder vorgesehen. Damit kann eine sichere und spielfreie Funktion der Betätigungsvorrichtung sichergestellt werden.

Nach einer Weiterbildung umfasst die Einrichtung eine Rutschkupplung, die bei Erreichen eines eingestellten Drehmoments eine weitere Erhöhung der Vorspannung verhindert. Eine Beschädigung oder Zerstörung der Seilzüge kann dadurch vermieden werden.

Die Erfindung umfasst auch eine Abgasanlage eines Kraftfahrzeuges mit einem Klappenventil, zu dessen Betätigung eine Vorrichtung der vorbeschriebenen Art vorgesehen ist. Nach einer Weiterbildung können von einem gemeinsamen Antriebsmittel zwei erfindungsgemäße Doppelseilzüge gleichzeitig betätigbar sein. Dadurch werden Kosten und Bauraum sowie Gewicht eingespart.

Ausführungsbeispiele der Erfindung sind in den Zeichnungen dargestellt und werden nachfolgend beschrieben. Es zeigen, jeweils in schematischer Darstellung,
- Fig. 1: eine Draufsicht auf eine erfindungsgemäße Betätigungsvorrichtung,
- Fig. 2: eine Seitenansicht eines Teils der Vorrichtung von Fig. 1,
- Fig. 3: eine Detailansicht einer erfindungsgemäßen Betätigungsvorrichtung, und
- Fig. 4: eine perspektivische Darstellung eines Teils zweier erfindungsgemäßer Betätigungsvorrichtungen mit gemeinsamen Antrieb.

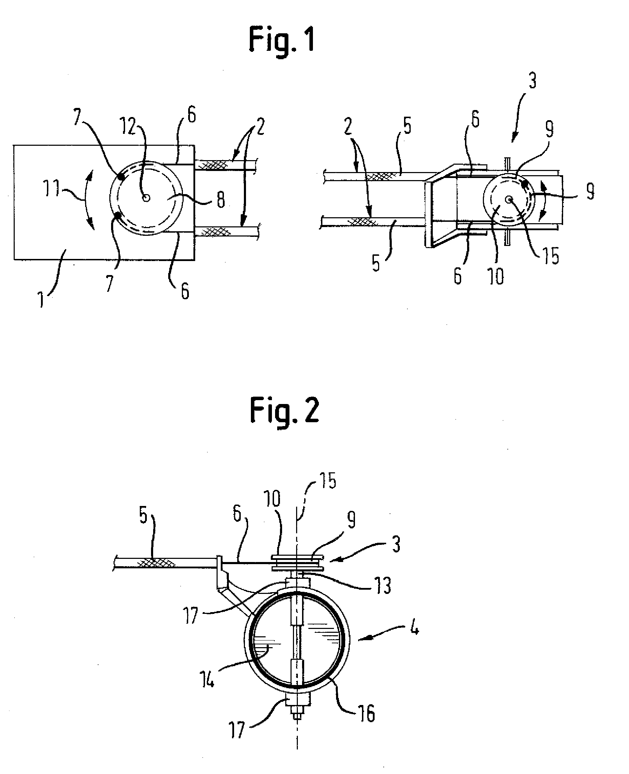

Die in den Fig. 1 und 2 dargestellte Betätigungsvorrichtung umfasst einen Antrieb 1, insbesondere Gleichstrommotor, zwei von dem Antrieb 1 betätigbare Bowdenzüge 2 und eine Anschlusseinrichtung 3 zwischen den beiden Bowdenzügen 2 und einem Klappenventil 4. Die beiden Bowdenzüge 2 umfassen jeweils eine Bowdenzughülle 5 und eine Seele 6, wobei die einen Enden 7 der beiden Bowdenzugseelen 6 mit einer ersten Scheibe 8 und die beiden anderen Enden 9 der Bowdenzugseelen 6 mit einer zweiten Scheibe 10 verbunden sind.

Die erste Scheibe 8 ist von dem Antrieb 1 gemäß Pfeil 11 in zwei entgegengesetzten Richtungen um ihre Achse 12 verdrehbar. Die beiden zugeordneten Enden 7 der Bowdenzugseelen 6 greifen in verschiedenen Hälften der Scheibe 8 an, so dass bei Verdrehen der Scheibe 8 in einer Richtung die Bowdenzugseele 6 des einen Bowdenzuges gezogen und die andere geschoben wird und umgekehrt. Die beiden anderen Enden 9 der beiden Bowdenzugseelen 6 greifen an der zweiten Scheibe 10 ebenfalls in unterschiedlicher Position an, so dass bei Verdrehen der ersten Scheibe 8 die zweite Scheibe 10 in entsprechender Richtung mitgedreht wird.

Die zweite Scheibe 10 ist mit der Welle 13 einer Klappe 14 des insbesondere in Fig. 2 erkennbaren Klappenventils 4 drehfest verbunden. Bei Verdrehen der zweiten Scheibe 10 um ihre Achse 15 wird somit die Klappe 14 des Klappenventils 4 mitgedreht. Die Klappe 14 ist insbesondere, wie dargestellt, in einem Rohrstück 16 angeordnet, dessen Durchfluss durch die Klappe 14 zwischen einer vollständig geöffneten Stellung und einer geschlossenen Stellung verändert werden kann. Bei Verwendung eines entsprechenden Antriebs 1 können auch Zwischenstellungen eingestellt werden.

An dem der zweiten Scheibe 10 gegenüberliegende Ende ist die Welle 13 in einem Lager 17 gelagert. Ein entsprechendes Lager 17 ist auf Seiten der zweiten Scheibe 10 vorhanden. Dadurch kann ein sicheres Verdrehen der Klappe 14 bei geringem Kraftaufwand gewährleistet werden.

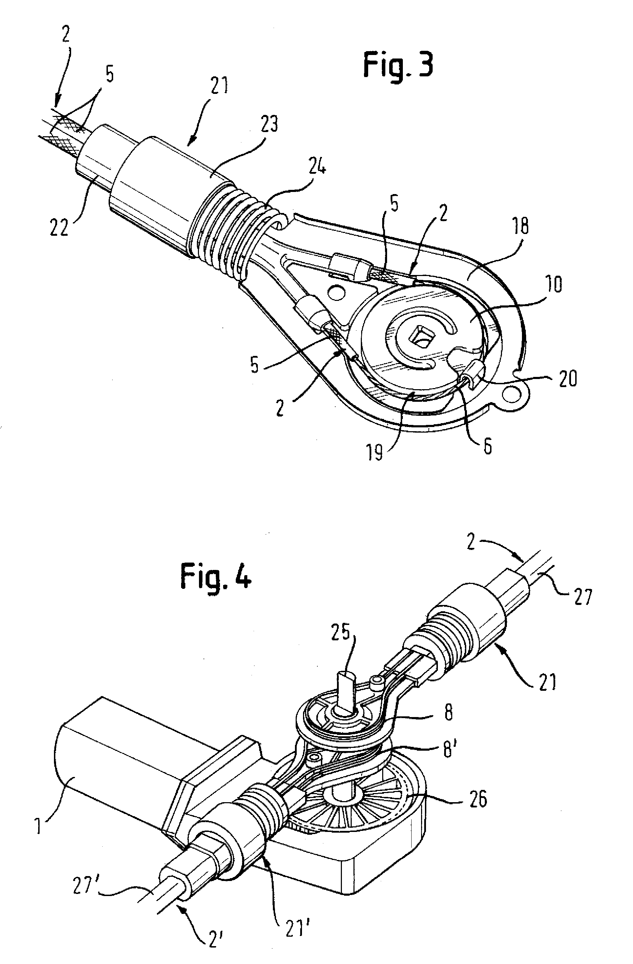

Bei dem in Fig. 3 dargestellten Detail eines Ausführungsbeispiels der Erfindung ist die Scheibe 10 als Blechformteil ausgebildet. Die Scheibe 10 ist in ein ebenfalls als Blechformteil ausgebildetes zweischaliges Gehäuse 18 eingelegt, von dem hier nur die eine Hälfte gezeigt ist.

Wie in Fig. 3 des Weiteren dargestellt ist, sind die beiden Seelen 6 der Bowdenzüge 2 als Endlosseele ausgebildet und um eine Mantelfläche 19 der Scheibe 10 herumgelegt. Über eine angeformte Nase 20 ist die Endlosseele 6 drehfest mit der Scheibe 10 verbunden. Des Weiteren ist in Fig. 3 eine Vorspanneinrichtung 21 dargestellt, die zwei gegeneinander verdrehbare Buchsen 22 und 23 sowie eine Feder 24 umfasst, die sich an dem Gehäuse 18 abstützt. Durch Verdrehen der beiden Buchsen 22 und 23 gegeneinander in der einen Richtung wird die Feder 24 komprimiert und dadurch die beiden Bowdenzüge 2 gespannt, da sich die Buchse 22 an den beiden Bowdenzugmänteln 5 abstützt. Bei umgekehrter Verdrehung der beiden Buchsen 22 und 23 gegeneinander können die beiden Bowdenzüge 2 wieder entspannt werden. Nicht dargestellt ist eine Rutschkupplung zwischen den beiden Buchsen 22 und 23, die bei Erreichen eines bestimmten Drehmomentes eine weitere Erhöhung der Vorspannung der beiden Bowdenzüge 2 verhindert.

Die andere Scheibe 8 kann in derselben Weise wie die Scheibe 10 ausgebildet sein. Die Orientierung der beiden Bowdenzüge 2 zwischen dem Antrieb 1 und dem Klappenventil 4 ist daher beliebig.

Fig. 4 zeigt einen Parallelantrieb zweier Doppelbowdenzüge 2 und 2' über einen gemeinsamen Antrieb 1. Die beiden Doppelbowdenzüge 2, 2' sind hierfür jeweils mit ihrer einen Scheibe 8 auf einer Welle 25 des Antriebs 1 angeordnet, die über ein Schneckengetriebe 26 verdrehbar ist. Die beiden Doppelbowdenzüge 2, 2' sind in entgegengesetzte Richtungen vom Antrieb 1 weggeführt und können so zwei getrennte Klappenventile betätigen. Durch Anbringen weiterer Doppelbowdenzüge auf der Antriebswelle können auch mehr als zwei Klappenelemente betätigt werden.

Wie in Fig. 4 im Übrigen dargestellt, können die beiden Doppelbowdenzüge 2 jeweils zusätzlich zu ihren Bowdenzughüllen 5 eine gemeinsame Hülle 27 aufweisen. Die Führung der Doppelseilzüge 2, 2' zwischen dem Antrieb 1 und den beiden in Fig. 4 nicht dargestellten Klappenventilen ist dadurch vereinfacht.

Der insbesondere als Gleichstrommotor ausgebildete Antrieb 1 ist bei Erreichen der beiden Endstellungen des Klappenventils 4 automatisch abschaltbar und in seiner Drehrichtung umschaltbar. Hierfür sind Mittel zur Messung der Leistungsaufnahme des Motors 1 vorgesehen. Sobald eine bestimmte Leistungsaufnahme überschritten wird, schaltet der Motor ab und ändert seine Drehrichtung. Bei erneuter Betätigung des Motors 1 wird das zugeordnete Klappenventil 4 dadurch in der entgegengesetzten Richtung betätigt. Bei Verwendung eines Schrittmotors sind auch beliebig viele Zwischenstellungen des Klappenventils 4 möglich, wodurch eine quasi stufenlose Regelung des Klappenventils 4 ermöglicht wird.

Die dargestellten Betätigungsvorrichtungen und Klappenventile sind insbesondere Teil einer Kraftfahrzeugabgasanlage. Beispielsweise können die Klappenventile 4 zum Öffnen und Schließen einer Bypassleitung eingesetzt werden. Die Betätigung kann dabei auch getaktet und mit unterschiedlicher Geschwindigkeit erfolgen, je nachdem, welche Anforderungen bestehen.

### Bezugszeichenliste

- 1: Antrieb
- 2: Bowdenzug
- 3: Anschlussmittel
- 4: Klappenventil
- 5: Bowdenzugmantel
- 6: Bowdenzugseele
- 7: Ende von 6
- 8: erste Scheibe
- 9: Ende von 6
- 10: zweite Scheibe
- 11: Doppelpfeil
- 12: Drehachse von 8
- 13: Welle
- 14: Klappe
- 15: Drehachse von 10
- 16: Rohrstück
- 17: Lager
- 18: Gehäuseschale
- 19: Mantelfläche von 10
- 20: Nase
- 21: Vorspanneinrichtung
- 22: erste Buchse
- 23: zweite Buchse
- 24: Feder
- 25: Welle
- 26: Schneckengetriebe
- 27: Hülle

## Patentansprüche

1. Vorrichtung zur Betätigung eines Klappenventils (4), insbesondere eines Bypassventils, in einer Abgasanlage eines Kraftfahrzeugs, mit einem Antriebsmittel (1), einem Kraftübertragungsmittel (2) und einem Anschlussmittel (3) zum Herstellen einer Wirkverbindung zwischen dem Antriebsmittel (1) und dem Klappenventil (4), wobei als Kraftübertragungsmittel zwei Seilzüge (2) vorgesehen sind, von denen der eine in Öffnungsrichtung und der andere in Schließrichtung am Klappenventil (4) angreift, wobei die Seilzüge (2) auf Seiten des Antriebs (1) und/oder auf Seiten des Klappenventils (4) über eine Mitnehmerscheibe (8, 10) geführt sind,
**dadurch gekennzeichnet, dass** die Mitnehmerscheibe (8, 10) in ein Gehäuse (18) eingelegt ist.

2. Vorrichtung nach Anspruch 1,
**dadurch gekennzeichnet, dass** beide Mitnehmerscheiben (8, 10) untereinander gleich ausgebildet sind.

3. Vorrichtung nach Anspruch 1 oder 2,
**dadurch gekennzeichnet , dass** die Mitnehmerscheiben (8, 10) als Blechformteile ausgebildet sind.

4. Vorrichtung nach einem der vorhergehenden Ansprüche,
**dadurch gekennzeichnet , dass** die Seilzüge (2) als Bowdenzüge ausgebildet sind.

5. Vorrichtung nach einem der vorhergehenden Ansprüche,
**dadurch gekennzeichnet , dass** die Seilzüge (2) an beiden Enden (7, 9) jeweils mit dem anderen Seilzug verbunden, insbesondere als Endlosseilzug ausgebildet sind.

6. Vorrichtung nach einem der vorhergehenden Ansprüche,
**dadurch gekennzeichnet , dass** als Antriebsmittel (1) ein Elektromotor, insbesondere Gleichstrommotor, vorgesehen ist.

7. Vorrichtung nach Anspruch 6,
**dadurch gekennzeichnet , dass** der Motor (1) bei Erreichen der Endstellungen des Klappenventils (4) automatisch abschaltbar und/oder in seiner Drehrichtung umschaltbar ist, insbesondere über eine Messung seiner Leistungsaufnahme.

8. Vorrichtung nach einem der vorhergehenden Ansprüche,
**dadurch gekennzeichnet , dass** Zwischenstellungen des Klappenventils (4) einstellbar sind, insbesondere durch Verwendung eines Schrittmotors.

9. Vorrichtung nach einem der vorhergehenden Ansprüche,
**dadurch gekennzeichnet , dass** Mittel zum getakteten Betätigen des Klappenventils (4) vorgesehen sind.

10. Vorrichtung nach einem der vorhergehenden Ansprüche,
**dadurch gekennzeichnet , dass** Mittel zum Betätigen des Klappenventils (4) mit unterschiedlicher Geschwindigkeit vorgesehen sind.

11. Vorrichtung nach einem der vorhergehenden Ansprüche,
**dadurch gekennzeichnet , dass** eine Einrichtung (21) zum Einstellen einer Vorspannung der beiden Seilzüge (2), insbesondere mit einer sich am Mantel (5) abstützenden Feder (24), vorgesehen ist.

12. Vorrichtung nach Anspruch 11,
**dadurch gekennzeichnet , dass** die Einrichtung (21) eine Rutschkupplung umfasst, die bei Erreichen eines eingestellten Drehmoments eine weitere Erhöhung der Vorspannung der Feder (24) verhindert.

13. Abgasanlage eines Kraftfahrzeuges mit einem Klappenventil (4), insbesondere Bypassventil,
**dadurch gekennzeichnet , dass** zur Betätigung des Klappenventils (4) eine Vorrichtung nach einem der vorhergehenden Ansprüche vorgesehen ist.

14. Abgasanlage nach Anspruch 13,
**dadurch gekennzeichnet , dass** zwei oder mehr Doppelseilzüge (2, 2') vorgesehen sind, die von einem gemeinsamen Antriebsmittel (1) betätigbar sind.
